(19) Europäisches Patentamt
European Patent Office
Office européen des brevets

(11) **EP 4 470 656 A1**

(12) **EUROPEAN PATENT APPLICATION**
published in accordance with Art. 153(4) EPC

(43) Date of publication:
**04.12.2024 Bulletin 2024/49**

(21) Application number: **24758125.9**

(22) Date of filing: **27.03.2024**

(51) International Patent Classification (IPC):
**B01D 53/22** (2006.01)    **B01D 69/00** (2006.01)
**B01D 69/10** (2006.01)    **B01D 69/12** (2006.01)
**B01D 71/02** (2006.01)

(52) Cooperative Patent Classification (CPC):
**B01D 53/22; B01D 69/00; B01D 69/10;
B01D 69/12; B01D 71/02**

(86) International application number:
**PCT/JP2024/012249**

(87) International publication number:
**WO 2024/204345 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 JP 2023058543**

(71) Applicant: **Daikin Industries, Ltd.
Osaka 530-0001 (JP)**

(72) Inventors:
• **YAMAGUCHI, Shuhei**
  **Osaka-shi**
  **Osaka 530-0001 (JP)**

• **NAMIKAWA, Takashi**
  **Osaka-shi**
  **Osaka 530-0001 (JP)**
• **YAMAUCHI, Akiyoshi**
  **Osaka-shi**
  **Osaka 530-0001 (JP)**
• **KISHIKAWA, Yosuke**
  **Osaka-shi**
  **Osaka 530-0001 (JP)**

(74) Representative: **Hoffmann Eitle
Patent- und Rechtsanwälte PartmbB
Arabellastraße 30
81925 München (DE)**

(54) **GAS SEPARATION METHOD**

(57) The present disclosure aims to provide a novel method for separating a fluorocarbon gas.

A method for separating a fluorocarbon gas comprising:
feeding a mixed gas comprising two or more kinds of fluorocarbon gases having different molecular diameters from each other to a porous membrane and separating a gas composition in which a mixing ratio of one kind of a fluorocarbon gas selected from the two or more kinds of fluorocarbon gases is increased or a single gas, wherein the porous membrane comprises a zeolite.

**Description**

Technical Field

The present disclosure relates to a method for separating gas and a separation apparatus.

Background Art

Distillation of a mixture of fluorocarbons has been a known as a method of separating a fluorocarbo. Patent Literature 1 describes that a mixture of 2,3,3,3-tetrafluoropropene and hexafluoropropane is mixed with an extraction solvent to obtain an extraction mixture, and then the obtained extraction mixture is distilled to obtain a distillate having hexafluoropropane as the main component and a distillate including 2,3,3,3-tetrafluoropropene.

Citation List

Patent Literature

Patent Literature 1: JA 2018-002602 A

Summary of Invention

Technical Problem

The present disclosure aims to provide a novel method for separating a fluorocarbon gas.

Solution to Problem

The present disclosure provides the following aspects.

[1] A method for separating a fluorocarbon gas comprising:

feeding a mixed gas comprising two or more kinds of fluorocarbon gases having different molecular diameters from each other to a porous membrane and separating a gas composition in which a mixing ratio of one kind of a fluorocarbon gas selected from the two or more kinds of fluorocarbon gases is increased or a single gas, wherein the porous membrane comprises a zeolite.

[2] The method for separating a fluorocarbon gas according to [1], wherein the average pore diameter of the porous membrane is 2 Å or more and 10 Å or less.

[3] The method for separating a fluorocarbon gas according to [1] or [2], wherein the porous membrane comprises a porous membrane formed by a hydrothermal synthesis method.

[4] The method for separating a fluorocarbon gas according to any one of [1] to [3], wherein the zeolite comprises one or more kinds selected from the group consisting of A-type zeolites, CHA-type zeolites or ZSM-5-type zeolites.

[5] The method for separating a fluorocarbon gas according to any one of [1] to [4], wherein the molecular diameter of the one kind of a fluorocarbon gas is 2 Å or more and 7 Å or less.

[6] The method for separating a fluorocarbon gas according to any one of [1] to [5], wherein the difference between the molecular diameter of the one kind of a fluorocarbon gas and molecular diameters of other fluorocarbon gases is 0.1 Å or more and 3 Å or less.

[7] The method for separating a fluorocarbon gas according to any one of [1] to [6], wherein the mixed gas is fed to the porous membrane at 20°C or more and 300°C or less.

[8] The method for separating a fluorocarbon gas according to any one of [1] to [7], wherein the mixed gas is fed to the porous membrane at a differential pressure of 0.1 MPa or more.

[9] The method for separating a fluorocarbon gas according to any one of [1] to [8], wherein the porous membrane further comprises a porous support.

[10] The method for separating a fluorocarbon gas according to any one of [1] to [10], wherein the mixed gas comprises difluoromethane and pentafluoroethane.

[11] The method for separating a fluorocarbon gas according to any one of [1] to [10], wherein feeding of the mixed gas to the porous membrane comprises permeation of at least a part of the mixed gas through the porous membrane.

[12] An apparatus, comprising:

a porous membrane,
wherein the porous membrane comprises a zeolite for separating a gas composition in which a mixing ratio of one kind of a fluorocarbon gas is increased or a single gas from a mixed gas comprising two or more kinds of fluorocarbon gases having different molecular diameters.

Advantageous Effects of Invention

According to the present invention, a novel method for separating a fluorocarbon gas can be provided.

Brief Description of Drawing

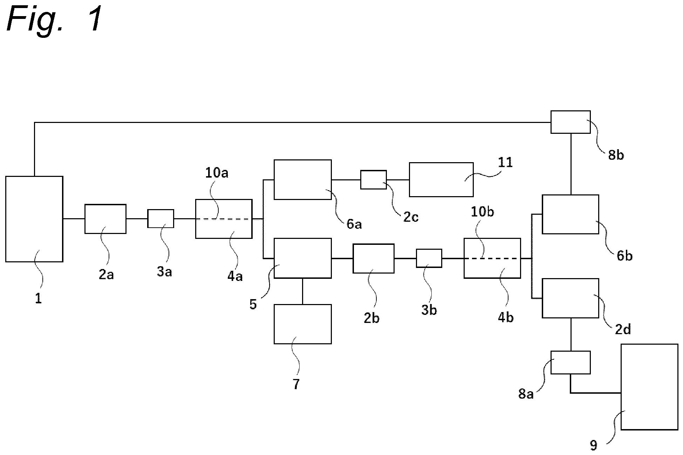

[Figure 1] Figure 1 is a schematic drawing showing a separation apparatus of an embodiment of the present disclosure.

Description of Embodiments

(First embodiment: Method for separating a gas)

The method for separating a gas of the present disclosure comprises feeding a mixed gas comprising two or more kinds of fluorocarbon gases with different molecular diameters from each other to a porous membrane, and separating one kind of a fluorocarbon gas selected from the two or more kinds of fluorocarbon gases,
wherein the porous membrane comprises a zeolite.
The present disclosure provides a novel method for separating a fluorocarbon and a separation apparatus. Fluorocarbons have been used as refrigerants and the like in the form of a mixed gas, and the separation by distillation has been attempted. However, the distillation is energy-intensive and azeotropy and the like further complicates separation process. Furthermore, the differences in the diameters of various fluorocarbons are small, whereby efficient separation and recycling was not easy even by membrane separation.
Known methods for separating a fluorocarbon include, for example, a method that uses a silicone resin as described in JP 1-42444 A and a method that uses a fluorine-based resin as described in Journal of Membrane Science 652 (2022) 120467. However, these methods achieve the separation by utilizing solubility and diffusibility effects in which a gas to be separated dissolves into a membrane, and thus the pore of a separation medium is negligible. The separation method according to the present disclosure differs from the conventional separation methods with respect to allowing fluorocarbon gases to permeate through pores of zeolite, which is the separation medium, and achieving the gas separation by the molecular sieve effect. For this reason, the present disclosure provides a novel method for separating a fluorocarbon.

(Mixed gas)

The mixed gas comprises two or more kinds of fluorocarbon gases, and the two or more kinds of fluorocarbon gases have different molecular diameters from each other. Fluorocarbon gases may be representatively a gaseous (aerious) fluorocarbon at 1 atm and room temperature (25°C).
The fluorocarbons are compounds comprising carbon atoms and fluorine atoms bonding to the carbon atoms, and the examples representatively include hydrochlorofluorocarbons, hydrofluorocarbons, and hydrofluoroolefins.
The examples of the hydrochlorofluorocarbon include chlorodifluoromethane and chlorotrifluoroethane.
The examples of the hydrofluorocarbon include hydrofluorocarbons having 1 carbon atom such as difluoromethane; and hydrofluorocarbons having 2 carbon atoms such as difluoroethanes (for example, 1,1-difluoroethane, 1,2-difluoroethane, particularly 1,1-difluoroethane), trifluoroethanes (for example, 1,1,1-trifluoroethane, 1,1,2-trifluoroethane, particularly 1,1,1-trifluoroethane), tetrafluoroethanes (for example, 1,1,1,2-tetrafluoroethane, 1,1,2,2-tetrafluoroethane, particularly 1,1,1,2-tetrafluoroethane), and pentafluoroethane; hydrofluorocarbons having 3 carbon atoms such as tetrafluoropropene and hexafluoropropane.

The examples of hydrofluoroolefin include 2,3,3,3-tetrafluoropropene (HFO-1234yf), 1,3,3,3-tetrafluoropropene (HFO-1234ze), cis-1,1,1,4,4,4-hexafluoro-2-butene (HFO-1336mzz-Z; DR-2), and trans-1,1,1,4,4,4-hexafluoro-2-butene (HFO-1336mzz-E).

The number of carbon atoms of the fluorocarbons may be preferably 1 to 5, and more preferably 1 to 3.

In the fluorocarbons comprised in the mixed gas, the content rate of the fluorocarbons having 1 to 5 carbon atoms may be, relative to the fluorocarbon total amount, for example, 80 mol% or more and 100 mol% or less, and 90 mol% or more and 100 mol% or less.

The two or more kinds of fluorocarbon gases may comprise, for example, a fluorocarbon having 1 carbon atom and a fluorocarbon having 2 carbon atoms, preferably may comprise difluoromethane and pentafluoroethane, and is more preferably composed of difluoromethane and pentafluoroethane. In another aspect, the two or more kinds of fluorocarbon gases may comprise a fluorocarbon having 1 carbon atom and a fluorocarbon having 3 carbon atoms, may comprise preferably difluoromethane (R32) and tetrafluoropropenes (particularly, 2,3,3,3-tetrafluoropropene and R1234yf), and are more preferably composed of difluoromethane (R32) and tetrafluoropropenes (particularly, 2,3,3,3-tetrafluoropropene and R1234yf).

The two or more kinds of fluorocarbon gases have different molecular diameters from each other.

In an aspect, the molecular diameter of one kind of a fluorocarbon (the fluorocarbon to be separated) comprised in the mixed gas is preferably 2 Å or more and 7 Å or less, more preferably 3 Å or more and 5 Å or less, and further preferably 3.2 Å or more and 4.4 Å or less. The molecular diameter of one kind of a fluorocarbon (the fluorocarbon to be separated) comprised in the mixed gas may be preferably 2 Å or more, more preferably 3 Å or more, and further preferably 3.2 Å or more, and preferably 7 Å or less, more preferably 5 Å or less, and further preferably 4.4 Å or less.

In the same aspect, the molecular diameter of other fluorocarbons comprised in the mixed gas is, for example, more than 4 Å, may be 4.2 Å or more and 10 Å or less, and may be 4.4 Å or more and 8 Å or less. The molecular diameter of other fluorocarbons comprised in the mixed gas may be, for example, more than 4 Å, preferably 4.2 Å or more, and for example, 10 Å or less, and preferably 8 Å or less.

In the same aspect, the difference in the molecular diameter between one kind of a fluorocarbon and other fluorocarbons comprised in the mixed gas may be preferably 0.1 Å or more, more preferably 0.2 Å or more and 3 Å or less, and further preferably 0.3 Å or more and 2 Å or less.

The molecular diameter of the fluorocarbon gas, given that the shape of fluorocarbon molecules is hard sphere, may be the value calculated by the following equation.

$$d \;=\; (ma/(3 \times 2^{1/2} \eta \pi))^{1/2} \quad \cdots \quad (x1)$$

wherein, in the equation (x1), d represents the molecular diameter, m represents the mass of one molecule, a represents the molecular speed, and $\eta$ represents the viscosity coefficient.

a can be calculated by the following equation.

$$a \;=\; (\gamma RT/M)^{1/2} \quad \cdots \quad (x2)$$

$\gamma$ herein is the heat capacity ratio and approximates 1.333. R is the gas constant, T is the absolute temperature, and M is the molar molecular mass.

$\eta$ may be measured by the capillary method.

The molecular diameter of fluorocarbons comprised in the mixed gas may be preferably 2 Å or more and 10 Å or less, and more preferably 3 Å or more and 8 Å or less.

The permeation amount of one kind of a fluorocarbon comprised in the mixed gas through zeolite may be preferably $10^{-10}$ (mol/(m$^2$·s·Pa) or more and $10^{-4}$ (mol/(m$^2$·s·Pa) or less, more preferably $10^{-9}$ (mol/(m$^2$·s·Pa) or more and $10^{-5}$ (mol/(m$^2$·s·Pa) or less, and further preferably $10^{-8}$ (mol/(m$^2$·s·Pa) or more and $10^{-6}$ (mol/(m$^2$·s·Pa) or less.

The boiling point of fluorocarbons comprised in the mixed gas at 1 atm may be, for example, preferably -80°C or more and -20°C or less, more preferably -60°C or more and -30°C or less, and further preferably -50°C or more and -30°C or less. The difference in the boiling points of other fluorocarbons and one kind of a fluorocarbon comprised in the mixed gas at 1 atm may be, for example, preferably 0°C or more and 20°C or less, and more preferably 0°C or more and 10°C or less.

The mixed gas may be an azeotropic mixture or a pseudo-azeotropic mixture of fluorocarbons. According to the method for separating gas of the present disclosure, a specific fluorocarbon can be separated, regardless of an azeotropic mixture or a pseudo-azeotropic mixture. The examples of the azeotropic mixture or pseudo-azeotropic mixture include mixtures having the difference between the boiling point of a fluorocarbon to be separated and the boiling points of other fluorocarbons of 1°C or more and 20°C or less, and further 3°C or more and 18°C or less.

In the mixed gas, the content rate of fluorocarbons relative to the mixed gas total amount may be, for example, 80 mol% or more and 100 mol% or less, and 90 mol% or more and 100 mol% or less.

The mixed gas may comprise other compounds than fluorocarbons. The boiling points of such other compounds may be, for example, -100°C or less, and may be -150°C or less. Such other compounds are representatively comprised in the mixture in the form of an air (gas).

The examples of the above other compounds include nitrogen, oxygen, carbon dioxide, and water.

In an aspect, the method for separating gas of the present disclosure may comprise feeding a mixed gas of difluoromethane and pentafluoroethane to a porous membrane, and separating difluoromethane.

(Porous membrane)

The porous membrane is a membrane with a plurality of pores and comprises a zeolite. Zeolite may be representatively a porous metal oxide based on aluminosilicate, and the zeolites with framework codes assigned by International Zeolite Association can be used.

The examples of the zeolite include specifically A type, ferrierite, MCM-22, ZSM-5, mordenite, L type, Y type, X type, and beta type, and preferably include A type, CHA type, and ZSM-5 type.

In an aspect, a composition formula of the zeolite may be represented by $M^{n+}_{2/n}O \cdot (Al_2O_3) \cdot (SiO_2)_x \cdot yH_2O$, wherein $M^{n+}$ represents an n-valent metal cation; n represents an integer of 1 to 5, x represents an integer of 2 or more, for example, an integer of 2 to 10; and y represents an integer of 1 or more, for example, an integer of 1 to 50.

The silica/alumina ratio in the zeolite may be preferably 1.25 or more and 100 or less, more preferably 5 or more and 50 or less, and further preferably 10 or more and 30 or less. The silica/alumina ratio is equivalent to x in the above formula

$$M^{n+}_{2/n}O \cdot (Al_2O_3) \cdot (SiO_2)_x \cdot yH_2O.$$

The average pore diameter of the pores of the zeolite may be preferably 2 Å or more and 10 Å or less, more preferably 3 Å or more and 8 Å or less, and further preferably 3 Å or more and 6 Å or less. When an average pore diameter of pores of the zeolite is within such ranges, the separation efficiency of a fluorocarbon may be enhanced.

The average pore diameter of pores of the zeolite is measured for adsorption/desorption isotherm of a nitrogen gas to be calculated by the BJH method based on the pressure and nitrogen adsorption/desorption amount.

The porosity of the zeolite is measured for adsorption/desorption isotherm of a nitrogen gas and can be calculated by the t-plot method based on the pressure and nitrogen adsorption/desorption amount.

The zeolite thickness in the porous membrane may be preferably 0.1 $\mu$m or more and 100 $\mu$m or less, more preferably 0.5 $\mu$m or more and 50 $\mu$m or less, and further preferably 1 $\mu$m or more and 10 $\mu$m or less.

The porous membrane comprises the zeolite, and may further comprise a porous support. In such an aspect, the porous membrane may comprise a porous support and the zeolite disposed on the porous support, and may preferably comprise a porous support and a porous zeolite membrane disposed on the porous support.

The porous membrane, when comprising a porous support, may enhance the stability of the porous membrane. When the mixed gas is fed to the porous membrane, the permeability of the mixed gas through the zeolite membrane may be enhanced, whereby the separation efficiency is expected to be more enhanced.

The porous support may be either an inorganic porous support or an organic porous support.

The inorganic porous support may be formed of inorganic materials such as silica, alumina, zirconia, silicon carbide, silicon nitride, and mixtures of these. The inorganic porous support may be more preferably a porous alumina support.

The organic porous support may be preferably formed of a heat resistant polymer. The examples of the heat resistant polymer include polysulfone, polyether sulfone, sulfonated polysulfone, sulfonated polyether sulfone, polyimide, polytetrafluoroethylene, polyvinylidene fluoride, and derivatives of these. In the present disclosure, the heat resistant polymer may be understood as a polymer having a glass transition temperature of 100°C or more, and may be preferably understood as a polymer having a glass transition temperature of 200°C or more.

The average pore diameter of pores of the porous support may be preferably 10 nm or more and 500 nm or less, more preferably 15 nm or more and 300 nm or less, and further preferably 20 nm or more and 200 nm or less.

The porous membrane may further comprise a porous intermediate layer between the porous support and the zeolite. When such a porous intermediate layer is included, the continuity of pore diameters of the zeolite and the porous support may be enhanced, whereby the permeability of the mixed gas through porous membrane is expected to be more enhanced.

The porous intermediate layer may be formed of either an inorganic material or an organic material, and is preferably formed of an inorganic material. The examples of the inorganic material include silica, alumina, zirconia, silicon carbide, silicon nitride, and mixtures of these. The organic material is preferably a heat resistant polymer material, and the examples specifically include polysulfone, polyether sulfone, sulfonated polysulfone, sulfonated polyether sulfone, polyimide, polytetrafluoroethylene, polyvinylidene fluoride, and derivatives thereof.

The average pore diameter of pores of the porous intermediate layer may be preferably 0.5 nm or more and 30 nm or less, more preferably 0.7 nm or more and 20 nm or less, and further preferably 1 nm or more and 10 nm or less.

In the present disclosure, when the porous membrane comprises the porous support or the intermediate layer, the average pore diameter of the porous membrane means the average pore diameter of pores of the zeolite, and the pore diameter of the porous support or the intermediate layer is irrelevant when measuring and calculating the average pore diameter of the porous membrane.

The examples of the method for producing such a porous membrane include the hydrothermal synthesis method. Representatively, in the hydrothermal synthesis method, a raw material composition comprising a silicon compound, an aluminum compound, a metal compound (provided that the silicon compound and aluminum compound are excluded), water and a structure directing agent used as needed is subjected to the hydrothermal synthesis reaction, whereby a zeolite may be synthesized. During the hydrothermal synthesis reaction, a seed crystal may be allowed to be present therewith.

The silicon compound comprises silica sol, fumed silica, precipitated silica, aluminosilicate, alkoxysilane and the like.

The aluminum compound comprises aluminum hydroxide, aluminum oxide, aluminum sulfate, aluminum chloride, aluminum nitrate, aluminosilicate, metallic aluminum, pseudo boehmite, alumina sol, aluminum alkoxide and the like.

The metal compound comprises lithium hydroxide, sodium hydroxide, potassium hydroxide, rubidium hydroxide and the like.

The structure directing agent comprises structure directing agents directing CHA-type zeolites such as N,N,N-trialkyladamantane ammonium cation, N,N,N-trimethyl benzyl ammonium cation, N-alkyl-3-quinuclidinol cation, N,N,N-trialkyl exoamino norbornane cation and N,N,N-trialkyl cyclohexyl ammonium cation, N,N,N-trimethyl benzyl ammonium cation, and N,N,N-trialkyl cyclohexyl ammonium cation; structure directing agents directing the ZSM-5 type such as tetrapropyl ammonium cation, and tetraethyl ammonium cation; and structure directing agents directing the A type such as tetramethyl ammonium cation.

The silicon compound, aluminum compound, metal compound, water and structure directing agent used as needed can be suitably used in accordance with the structure of an intended zeolite.

The temperature of the hydrothermal synthesis reaction may be preferably 80°C or more and 200°C or less, more preferably 100°C or more and 180°C or less, and further preferably 120°C or more and 160°C or less.

The hydrothermal synthesis reaction is preferably carried out in a hermetically sealed container.

In an aspect, when the porous membrane comprises a porous support and/or an intermediate layer, a seed crystal of the zeolite is applied onto the porous support and/or the intermediate layer, and the seed crystal applied onto the porous support and/or the intermediate layer is immersed in the raw material composition and hydrothermally synthesized, thereby producing a porous membrane.

(Contact method)

When the mixed gas comprising fluorocarbons is fed to the porous membrane, at least one kind of a fluorocarbon gas permeates through pores of the porous membrane thereby separating such a fluorocarbon gas. The fluorocarbon gas may be representatively fed to the porous membrane in the form of a gas (air).

In an aspect, according to the separation method, the porous membrane selectively allows only a specific fluorocarbon gas to permeate, whereby the specific fluorocarbon gas may be separated from the mixed gas comprising two or more kinds of fluorocarbon gases. In a preferable aspect, according to the separation method, a gas of fluorocarbon having 1 carbon atom may be separated from the mixed gas comprising two or more kinds of fluorocarbon gases with different molecular diameters.

The feeding of the mixed gas to the porous membrane may be carried out by, for example, the column method. The column method can be carried out by fixing the porous membrane on a container (column) and flowing the mixed gas through the container (column).

In an aspect, the temperature at the feeding may be, for example, 5°C or more and 500°C or less, and may further be 10°C or more and 300°C or less. The pressure (gauge pressure) at the feeding may be 0.05 MPaG or more and 20 MPaG or less, and may be 0.1 MPaG or more and 10 MPaG or less. When a pressure at the feeding is within the above range, fluorocarbons easily permeate through the porous membrane, whereby the separation efficiency may be enhanced and the pore structure of the porous membrane may be retained.

The flow rate of the mixed gas may be 0.001 kg/hr or more and 1,000 kg/hr or less, 0.005 kg/hr or more and 500 kg/hr or less, and further 0.01 kg/hr or more and 100 kg/hr.

Only the fluorocarbon gases permeated through the porous membrane are recovered, thereby recovering the specific fluorocarbon gases. In this aspect, the method for separating a fluorocarbon gas of the present disclosure may also be understood as the method for recovering a fluorocarbon gas.

(Second embodiment: Composite material)

The composite material comprising the porous membrane and fluorocarbons is also encompassed in the technical scope of the present disclosure. When the mixed gas is fed to the porous membrane, at least a part of the fluorocarbons comprised in the mixed gas remains in the porous membrane, whereby the composite material can be produced.

The fluorocarbons and the porous membrane in the present embodiment have the same meaning as the fluorocarbons and the porous membrane in the first embodiment.

In the composite material, the fluorocarbons preferably comprise a fluorocarbon having 1 carbon atom, and may more preferably comprise one or more kinds selected from chlorodifluoromethane and difluoromethane.

In a preferable aspect, the content of a fluorocarbon having 1 carbon atom in the composite material is larger than the content of fluorocarbons having 2 or more carbon atoms, and more preferably the total content of one or more kinds selected from chlorodifluoromethane and difluoromethane is larger than the content of fluorocarbons other than those.

The composite material may comprise a resin other than the fluorocarbons and the porous membrane. The examples of the resin include an acrylic resin, a polyurethane resin, a polyolefin resin, a polyester resin, a polyamide resin, a polyimide resin, a vinyl chloride resin, a styrene resin, a vinyl ether resin, a polyvinyl alcohol resin, a polycarbonate resin, a polyether sulfone rein and a polysulfone resin.

The composite material may also comprise additives such as an emulsifier, an antifoaming agent, a surfactant, a leveling agent, a thickener, a viscoelastic modifier, an antifoaming agent, a wetting agent, a dispersant, a preservative, a plasticizer, a penetrating agent, a flavor, a disinfectant, a miticide, a fungicide, an UV absorber, an antioxidant, an antistatic agent, a flame retarder, a dye, and a pigment.

(Third embodiment: Separation apparatus)

Hereinafter, the separation apparatus in an embodiment of the present disclosure will be described, but the present disclosure is not limited to such an aspect.

The apparatus of the present disclosure comprises

a porous membrane,
wherein the porous membrane comprises a zeolite for separating a gas composition in which a mixing ratio of one kind of a fluorocarbon gas is increased or a single gas from a mixed gas comprising two or more kinds of fluorocarbon gases with different molecular diameters.

In Figure 1, a 2-staged separation apparatus will be schematically described as an example of the separation apparatus of the present disclosure.

In the separation apparatus of Figure 1, a mixed gas comprising two or more kinds of fluorocarbon gases with different molecular diameters is stored in a gas tank 1. The mixed gas is fed to a separation module 4a of the first stage via a pressure regulator 2a and a mass flow controller 3a. In an aspect, the pressure regulator 2a may regulate the pressure, but is not limited to the aspect. The pressure regulator 2a can be optionally left out.

The separation module 4a comprises a porous membrane 10a, and the mixed gas is fed to the porous membrane 10a. During this feeding, the pressure may also be regulated by a nonpermeation-side back pressure regulating valve 6a. Representatively, the pressure may be reduced by the nonpermeation-side back pressure regulating valve 6a. The nonpermeation-side back pressure regulating valve 6a can be optionally left out.

The gasses that did not permeate the porous membrane 10a (hereinafter, also referred to as "the first nonpermeation-side gas") are recovered in a nonpermeation-side gas recovery pipe 11 via a pressure regulator 2c. The first nonpermeation-side gases may be recovered in the gas tank 1. In an aspect, the flow rate of the first nonpermeation-side gasses may be regulated by the mass flow controller.

In the 2-staged separation apparatus, the gasses that permeated the porous membrane 10a (hereinafter, also referred to as "the first permeated gases") are measured for a permeation amount by a mass flow meter 5a and fed to a separation module 4b of the second stage via the pressure regulator 2b and the mass flow controller 3b. In an aspect, the pressure may be regulated by the pressure regulator 2b, but is not limited to the aspect. The pressure regulator 2b can be optionally left out.

The separation module 4b of the second stage comprises a porous membrane 10b, and the first permeated gases are fed to the porous membrane 10b. During this feeding, the pressure may also be regulated by a nonpermeation-side gas back pressure regulating valve 6b. Representatively, the pressure may be reduced by the nonpermeation-side back pressure regulating valve 6a. The nonpermeation-side gas back pressure regulating valve 6b can be optionally left out.

Of the first permeated gasses, the gases that did not permeate through the porous membrane 10b (hereinafter, also referred to as "the second nonpermeation-side gas") is analyzed for the gas composition with a gas composition analyzer 8b and then allowed to circulate to the gas tank 1. In another aspect, the second nonpermeation-side gas may be recovered separately by the nonpermeation-side gas recovery pipe. In another aspect, the second nonpermeation-side gas may be allowed to circulate separately between the mass flow meter 5 and the pressure regulator 2b. In an aspect, the gas composition analyzer 8b can be optionally left out.

Of the first permeated gases, the gases that permeated through the porous membrane 10b (hereinafter, also referred to as "the second permeated gases") is analyzed for the gas composition with a gas composition analyzer 8a via a pressure regulator 2d and then recovered in a recovery pipe 9. In an aspect, the permeation amount of a gas permeated through the porous membrane 10b may be measured using a mass flow meter. In an aspect, the gas composition analyzer 8a can be optionally left out.

In the present embodiment, the 2-staged separation apparatus has been described, but suitable changes can be made without being limited thereto and, for example, a 1-staged, a 3-staged or a 4- or more-staged separation apparatus may also be employed. In the case of a 1-staged apparatus, the first permeated gasses may be recovered in the recovery pipe, and the first nonpermeation-side gases may be recovered by the nonpermeation-side gas recovery pipe or may be allowed to circulate to the gas tank 1.

In the case of n-staged apparatus (n is 3 or more), the permeated gases that permeated through the separation module of the n-1 stage are fed to the separation molecule via the pressure regulator and the mass flow controller, and via the porous membrane provided in the separation module, the n-th permeated gasses that permeated the porous membrane and the n-th nonpermeation-side gases that did not permeate the porous membrane may be separated. The n-th permeated gasses, after the gas composition analysis that may be carried out as needed, are recovered, whereby the gas separation can be carried out. The n-th nonpermeation-side gases, after the gas analysis that may be carried out as needed, may be allowed to circulate to the gas tank 1 or recovered in the nonpermeation-side gas recovery pipe.

Examples

The present invention will be described in further details in reference to the following examples, but is not limited thereto.

(Example 1)

Fluorocarbon gases adjusted to a predetermined pressure and flow rate using a pressure regulator and a mass flow controller (MFC) were allowed to flow through a membrane module comprising a ZSM-5-type zeolite membrane (product of eSep Inc.). Using the pressure regulator and the mass flow meter (MFM), the pressure and the flow rate of the permeated side and the nonpermeation-side were confirmed. A pressure reducing pump was connected on the permeated side, and the measurement was carried out under reduced pressure condition as needed. The permeation degree of a single component gas was calculated from the flow rate.

The fluorocarbons used were R32 (difluoromethane) and R125 (1,1,1,2,2-pentafluoroethane). The molecular diameter of R32 is 3.9 Å and the molecular diameter of R125 is 4.4 Å.

The molecular diameter of the fluorocarbons used the values described in Wanigarathna, J. A. D. K. (2018). Adsorption-based fluorocarbon separation in zeolites and metal organic frameworks. Doctoral thesis, Nanyang Technological University, Singapore.

The zeolite used was a ZSM-5-type (pore diameter 5.5 Å) zeolite. The following table shows the pore diameter of the zeolite membrane, the temperature and feeding side differential pressure when measured, permeation amounts (R32 and R125), and permeation degree ratio.

[Table 1]

| | Type | Pore diameter | Temperature | Feeding side differential pressure | Permeation amount (R32) | Permeation amount (R125) | Permeation amount ratio |
|---|---|---|---|---|---|---|---|
| | | Å | °C | kPaA | mol/(m$^2$ · s · Pa) | | |
| Example 1 | ZSM-5 type | 5.5 | 200 | 100 | $6.46 \times 10^{-7}$ | $1.03 \times 10^{-7}$ | 6 |
| Example 2 | ZS-M-5 type | 5.5 | 100 | 100 | $1.12 \times 10^{-6}$ | $1.43 \times 10^{-7}$ | 8 |
| Example 3 | ZS-M-5 type | 5.5 | 30 | 100 | $1.04 \times 10^{-6}$ | $3.66 \times 10^{-8}$ | 28 |

Examples 1 to 3 are the examples of the present disclosure, in which the fluorocarbons were fed to the porous membranes comprising the zeolite. In all examples, it was confirmed that the permeation amounts of R32 (difluoromethane) were higher than the permeation amounts of R125 (1,1,1,2,2-pentafluoroethane), and the ratios of permeation amounts of R32 to permeation amounts of R125 were 6 to 28 times. These findings reveal that when a mixed gas comprising two or more kinds of fluorocarbon gases is fed to the porous membranes comprising the zeolite, one kind of fluorocarbon gas selected from the two or more kinds of fluorocarbon gases can be separated.

Reference Signs List

1 Gas tank
2a, 2b, 2c, 2d Pressure regulator
3a, 3b Mass flow controller
4a, 4b Separation module
5 Mass flow meter
6a, 6b Nonpermeation-side back pressure regulating valve
7 Pressure reducer and booster
8a, 8b Gas composition analyzer
9 Separated gas recovery pipe
10a, 10b Porous membrane
11 Nonpermeation-side gas recovery pipe

Claims

1. A method for separating a fluorocarbon gas comprising:

   feeding a mixed gas comprising two or more kinds of fluorocarbon gases having different molecular diameters from each other to a porous membrane and separating a gas composition in which a mixing ratio of one kind of a fluorocarbon gas selected from the two or more kinds of fluorocarbon gases is increased; or a single gas; wherein the porous membrane comprises a zeolite.

2. The method for separating a fluorocarbon gas according to claim 1, wherein the average pore diameter of the porous membrane is 2 Å or more and 10 Å or less.

3. The method for separating a fluorocarbon gas according to claim 1 or 2, wherein the porous membrane comprises a porous membrane formed by a hydrothermal synthesis method.

4. The method for separating a fluorocarbon gas according to any one of claims 1 to 3, wherein the zeolite comprises one or more kinds selected from the group consisting of A-type zeolites, CHA-type zeolites or ZSM-5-type zeolites.

5. The method for separating a fluorocarbon gas according to any one of claims 1 to 4, wherein the molecular diameter of the one kind of a fluorocarbon gas is 2 Å or more and 7 Å or less.

6. The method for separating a fluorocarbon gas according to any one of claims 1 to 5, wherein the difference between the molecular diameter of the one kind of a fluorocarbon gas and molecular diameters of other fluorocarbon gases is 0.1 Å or more and 3 Å or less.

7. The method for separating a fluorocarbon gas according to any one of claims 1 to 6, wherein the mixed gas is fed to the porous membrane at 20°C or more and 300°C or less.

8. The method for separating a fluorocarbon gas according to any one of claims 1 to 7, wherein the mixed gas is fed to the porous membrane at a differential pressure of 0.1 MPa or more.

9. The method for separating a fluorocarbon gas according to any one of claims 1 to 8, wherein the porous membrane further comprises a porous support.

10. The method for separating a fluorocarbon gas according to any one of claims 1 to 9, wherein the mixed gas comprises difluoromethane and pentafluoroethane.

11. The method for separating a fluorocarbon gas according to any one of claims 1 to 10, wherein feeding of the mixed gas to the porous membrane comprises permeation of at least a part of the mixed gas through the porous membrane.

12. An apparatus, comprising:

a porous membrane,
wherein the porous membrane comprises a zeolite for separating a gas composition in which a mixing ratio of one kind of a fluorocarbon gas is increased; or a single gas; from a mixed gas comprising two or more kinds of fluorocarbon gases having different molecular diameters.

Fig. 1

| INTERNATIONAL SEARCH REPORT | International application No. |
|---|---|
| | **PCT/JP2024/012249** |

**A. CLASSIFICATION OF SUBJECT MATTER**

**B01D 53/22**(2006.01)i; **B01D 69/00**(2006.01)i; **B01D 69/10**(2006.01)i; **B01D 69/12**(2006.01)i; **B01D 71/02**(2006.01)i
FI: B01D53/22; B01D69/00; B01D69/10; B01D69/12; B01D71/02 500

According to International Patent Classification (IPC) or to both national classification and IPC

**B. FIELDS SEARCHED**

Minimum documentation searched (classification system followed by classification symbols)

B01D53/22; B01D69/00; B01D69/10; B01D69/12; B01D71/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2016-67972 A (DAIOH SHINYO CO., LTD.) 09 May 2016 (2016-05-09) paragraphs [0094], [0106]-[0113], fig. 3 | 1-12 |
| A | JP 2017-196601 A (DAIOH SHINYO CO., LTD.) 02 November 2017 (2017-11-02) | 1-12 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 June 2024** | **18 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

INTERNATIONAL SEARCH REPORT
Information on patent family members

International application No.

**PCT/JP2024/012249**

| Patent document cited in search report | | | Publication date (day/month/year) | Patent family member(s) | Publication date (day/month/year) |
|---|---|---|---|---|---|
| JP | 2016-67972 | A | 09 May 2016 | WO 2016/047756 A1 paragraphs [0094], [0106]-[0113], fig. 3 | |
| JP | 2017-196601 | A | 02 November 2017 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018002602 A

- JP 1042444 A

**Non-patent literature cited in the description**

- *Journal of Membrane Science*, 2022, vol. 652, 120467